# EUROPÄISCHE PATENTSCHRIFT

(11) **EP 2 105 234 B1**
(45) Veröffentlichungstag und Bekanntmachung des Hinweises auf die Patenterteilung: **05.07.2017**
(21) Anmeldenummer: 09000846.7
(22) Anmeldetag: 22.01.2009
(51) Int. Cl.: B23D 51/02

(54) **Motorisch angetriebene handgeführte Stichsäge**
Hand held jig saw with a motorised drive
Scie sauteuse manuelle motorisée

(30) Priorität: 28.03.2008 DE 102008016207
(43) Veröffentlichungstag der Anmeldung: 30.09.2009
(73) Patentinhaber: Metabowerke GmbH, 72622 Nürtingen (DE)
(72) Erfinder: Baumann, Martin, 73728 Esslingen (DE)
(74) Vertreter: Raunecker, Klaus Peter

(56) Entgegenhaltungen:
- DE-A1- 3 509 515
- DE-B3-102004 024 092
- DE-U1- 20 303 761
- US-A- 2 722 244
- US-A- 2 954 808
- US-A- 3 750 283
- US-A1- 2007 000 368

## Beschreibung

Die Erfindung betrifft eine motorisch angetriebene handgeführte Stichsäge mit einem Maschinengehäuse und mit einer werkstückzugewandten Führungsplatte, über die das Stichsägenblatt hin- und hergehend antreibbar vorsteht.

Beim Arbeiten mit Stichsägen besteht häufig das Bedürfnis, ohne Anbringung eines vorherigen Lochs in einem Plattenwerkstoff durch Neigung der gesamten Stichsäge mit dem Stichsägenblatt in den Plattenwerkstoff einzutauchen. Dies ist jedoch in der Regel nur von geübten Handwerkern ausführbar; es birgt die Gefahr von Beschädigungen der Stichsäge sowie die Gefahr von Verletzungen.

Die Patentschrift DE 10 2004 024 092 B3 offenbart die Stichsäge nach dem Oberbegriff des Anspruchs 1, und betrifft einen Führungsadapter mit Krallenkontur für eine Säbelsäge, der Trägermittel aufweist, mit denen er mit den Werkzeug verbunden werden kann und ein Anlegeelement zum Anlegen an einem zum bearbeitenden Werkstück. Das Anlegeelement weist an seinem dem Werkstück zugewandten Ende eine Mehrzahl von krallenförmigen Zähnen auf. Durch den Führungsadapter wird der beim Schnittvorgang nutzbare Hebelarm der Säbelsäge deutlich verlängert.

Die Gebrauchsmusterschrift DE 203 03 761 U1 betrifft eine Führungsschiene für elektrische Handwerkzeuge mit einer Lippe aus einem elastischen Material, wobei die Lippe eine gute Anlage der Führungsschien auf einem Werkstück mit unebener Oberfläche gewährleisten soll.

Die offengelegte Patentanmeldung US 2 722 244 A betrifft eine Klemme für ein verschwenkbares Sägeblatt einer Säge, die einen sicheren Einbau des Sägeblattes gewährleisten soll. Die Säge weist eine halbkreisförmige in Richtung des Werkstückes abstehende Führung auf, mit der das Werkzeug auf das zu bearbeitende Werkstück aufgelegt und entlang der das Werkzeug relativ zum Werkstück verschwenkt werden kann.

Die offengelegte Patentanmeldung US 2 954 808 A betrifft einen Adapter, der mit einer Säbelsäge verbunden werden kann. Der Adapter bildet eine Führung für die Säge der sich an einer Führungswand abstützen kann, um einen geraden Schnitt parallel zu der Führungswand zu ermöglichen.

Die offengelegte Patentanmeldung US 3 750 283 A betrifft einen Adapter, mit dessen Hilfe zum Beispiel eine Bohrmaschine als Säbelsäge genutzt werden kann. Der Adapter kann eine Führungsplatte aufweisen, um das Ansetzen des Sägeblattes auf dem Werkstück zu erleichtern.

Die offengelegte Patentanmeldung US 2007/000368 A1 zeigt eine Stichsäge mit einer Führungsplatte, deren Winkelposition relativ zum Werkzeug sowohl in Sägerichtung als auch quer zur Sägerichtung eingestellt werden kann.

Die offengelegte Patentanmeldung DE 35 09 515 A1 betrifft eine Stichsäge mit einem auswechselbaren Laufschuh aus Plastik zum Schutz der Fußplatte gegen Beschädigung.

Der vorliegenden Erfindung liegt die Aufgabe zugrunde, die Anwendbarkeit einer bekannten motorisch angetriebenen handgeführten Stichsäge der vorstehend genannten Art zu erweitern.

Diese Aufgabe wird bei einer gattungsgemäßen Stichsäge erfindungsgemäß dadurch gelöst, dass die Stichsäge zum Ausführen von Eintauchschnitten um eine quer zur Antriebsrichtung des Stichsägenblatts erstreckte Achse oder Kante der Führungsplatte neigbar ist und dass im Bereich dieser Achse oder Kante ein Rutschverhinderungsmittel vorgesehen ist, mittels dessen die Führungsplatte beim Neigen gegen das Werkstück anliegt.

Durch das erfindungsgemäße Rutschverhinderungsmittel ist die Anwendbarkeit und Handhabbarkeit der Stichsäge wesentlich verbessert. Das Rutschverhinderungsmittel bildet nämlich eine sehr wirksame "Eintauchhilfe", mit der verhindert werden kann, dass die Stichsäge beim Eintauchen in das Werkstück wegrutscht. Durch das erfindungsgemäße Rutschverhinderungsmittel wird die Reibungskraft zwischen der Kippachse oder -kante der Führungsplatte und der Werkstückoberfläche erhöht, so dass die Gefahr des Wegrutschens für den Benutzer reduziert ist, selbst wenn eine Stoßeinwirkung vom Sägeblatt auf das Maschinengehäuse übertragen wird.

Das Rutschverhinderungsmittel kann in an sich beliebiger Weise ausgebildet sein und insbesondere spitz auslaufende Zähne, Spieße oder dergleichen umfassen. Demgegenüber erweist es sich aber als vorteilhaft, wenn das Rutschverhinderungsmittel ein elastisch nachgiebiges Material umfasst, insbesondere eine Gummierung. Auf diese Weise wird die Oberfläche des Werkstücks in keinster Weise beeinträchtigt, und dennoch kann eine Stabilisierung der Stichsäge beim Eintauchen in das Werkstück realisiert werden.

Es erweist sich weiter als vorteilhaft, wenn das Rutschverhinderungsmittel unmittelbar oder mittelbar im Bereich einer vorderen Kante der Führungsplatte vorgesehen ist. Es sei aber auch darauf hingewiesen, dass das Rutschverhinderungsmittel nicht notwendigerweise mit einer vorderen Kante der Führungsplatte koinzidieren muss.

Des Weiteren kann es sich als vorteilhaft erweisen, wenn das Rutschverhinderungsmittel an einem zusätzlichen Trägerteil vorgesehen ist, welches lösbar oder unlösbar an der Führungsplatte befestigt ist. Auf diese Weise lässt sich das Rutschverhinderungsmittel separat von der Führungsplatte fertigen, was wiederum vorteilhaft ist, da die Führungsplatte in der Regel eine leicht gleitende, verzinkte Oberfläche erhält und außerdem typischerweise aus metallischen Werkstoffen hergestellt ist.

Es erweist sich nach einer weiteren Ausführungsform der Erfindung als vorteilhaft, wenn das Rutschverhinderungsmittel angespritzt, also im Spritzgussverfahren hergestellt ist. Es kann insbesondere ein Zweikomponentenspritzgussteil umfassen. Auf diese Weise ist es möglich, dass die eine Komponente eine formgebende und stabilisierende Funktion ausführt und die zweite Komponente eine möglichst starke Rutschhemmung vermittelt. Bei der zweiten Komponente wird es sich daher insbesondere um ein nachgiebig verformbares und anpassbares Material handeln. Dabei muss die zweite Komponente aber nicht voluminös ausgebildet sein, sie kann auch eine dünne Deckschicht auf der ersten Komponente bilden.

Weiter erweist es sich als vorteilhaft, wenn das Rutschverhinderungsmittel durch lösbare Montagemittel, insbesondere Klemmmittel, an der Führungsplatte befestigbar ist. Auf diese Weise lässt sich das Rutschverhinderungsmittel entfernen, sofern seine Verwendung nicht gewünscht ist.

Das Rutschverhinderungsmittel ist erfindungsgemäß bei flächenhaft auf dem Werkstück aufliegender Führungsplatte von dem Werkstück beabstandet, so dass es nicht mit dem Werkstück haftend zusammenwirkt. Hier ist ein Abstand im mm-Bereich ausreichend.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform einer erfindungsgemäßen Stichsäge. In der Zeichnung zeigt:
Figur 1 eine Seitenansicht einer erfindungsgemäßen Stichsäge und
Figur 2 eine vergrößerte Detailansicht der Stichsäge mit einem erfindungsgemäßen Rutschverhinderungsmittel.

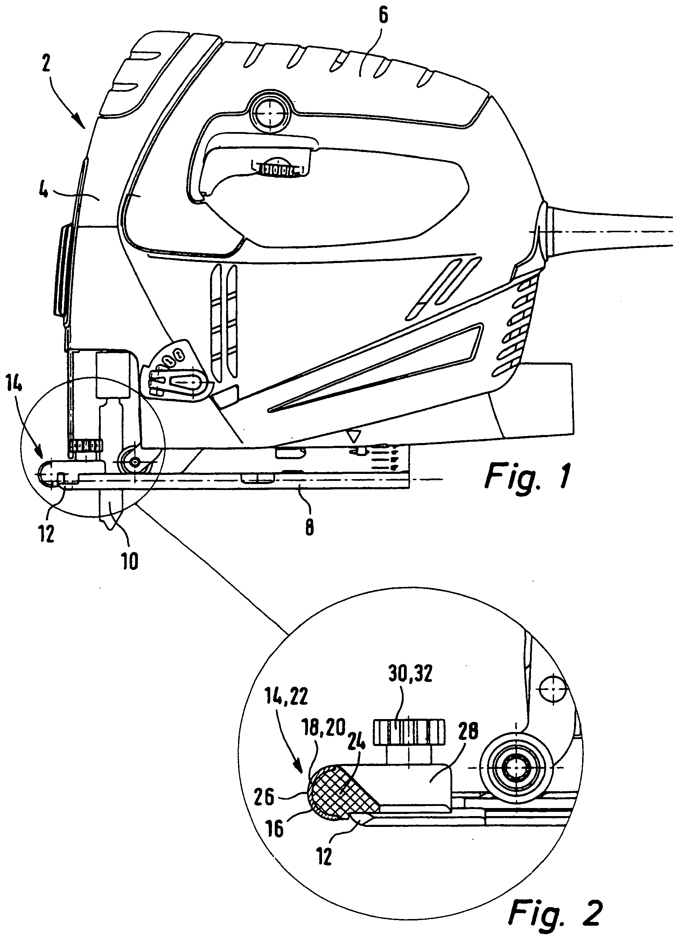

Figur 1 zeigt eine erfindungsgemäße motorisch angetriebene handgeführte Stichsäge 2 mit einem Maschinengehäuse 4, einem Handgriff 6 und einer Führungsplatte 8, mittels derer die Stichsäge auf ein zu bearbeitendes Werkstück auflegbar und bezüglich diesem verschiebbar ist. Ein hin- und hergehend antreibbares Stichsägenblatt 10 steht im Wesentlichen senkrecht über die Führungsplatte 8 in Richtung auf das nicht dargestellte Werkstück vor.

Im Bereich einer vorderen Kante 12 der Führungsplatte 8, die typischerweise leicht verrundet nach oben gezogen ist, ist ein insgesamt mit dem Bezugszeichen 14 bezeichnetes Rutschverhinderungsmittel vorgesehen, das vergrößert auch aus Figur 2 ersichtlich ist. Das Rutschverhinderungsmittel 14 soll die Reibung zu der Werkstückoberfläche vergrößern, wenn die Stichsäge 2 samt Führungsplatte 8 geneigt oder verkippt wird, nämlich um einen sogenannten Eintauchschnitt in das Werkstück ausführen zu können. Dies ist dann erforderlich, wenn keine Öffnung in dem Werkstück vorgesehen ist, in welche das Stichsägenblatt 10 vor Beginn des Sägeschnitts eingeführt werden kann. Durch das Rutschverhinderungsmittel 14 wird die Stichsäge beim Neigen gegenüber dem Werkstück stabilisiert, so dass eine geringere Gefahr besteht, dass der Benutzer mit der Stichsäge 2 abrutscht oder verrutscht. Die Kippachse verläuft dabei senkrecht zur Zeichnungsebene der Figuren 1 und 2 im Bereich der vorderen Kante 12 der Führungsplatte 8. Sie wird im dargestellten Fall durch das Rutschverhinderungsmittel 14 noch etwas nach vorn, nämlich zu dem verrundeten Umfang 16 des Rutschverhinderungsmittels verlagert.

Das Rutschverhinderungsmittel 14 umfasst in vorteilhafter Weise ein elastisch nachgiebiges Material 18, insbesondere eine Gummierung 20. Im dargestellten Fall ist das Rutschverhinderungsmittel 14 als Zweikomponentenspritzgussteil 22 ausgebildet und umfasst eine tragende und stabilisierende erste Komponente 24 und eine zweite nachgiebige und der Rutschverhinderung dienende Komponente 26.

Das Rutschverhinderungsmittel 14 umfasst außerdem ein Trägerteil 28, welches insbesondere metallisch ausgebildet ist. Das Rutschverhinderungsmittel 14 ist über ein Montagemittel 30 in Form eines Klemmmittels 32, hier einer Schraube, lösbar an der Führungsplatte 8 befestigbar. Es kann also bei Nichtgebrauch von der Führungsplatte 8 entfernt werden.

Aus Figur 2 ist weiter ersichtlich, dass bei flächenhaft mit der Führungsplatte 8 auf dem Werkstück aufliegender Stichsäge 2 das Rutschverhinderungsmittel 14 einen geringfügigen Abstand in der Größenordnung von Millimetern zu der Werkstückoberfläche aufweist. Das Rutschverhinderungsmittel 14 ist solchenfalls nicht wirksam und die Stichsäge kann ohne nennenswerten Widerstand mit ihrer Führungsplatte 8 gegenüber der Werkstückoberfläche bewegt werden.

## Patentansprüche

1. Motorisch angetriebene handgeführte Stichsäge (2) mit einem Maschinengehäuse (4) und mit einer werkstückzugewandten Führungsplatte (8), über die das Stichsägenblatt (10) hin- und hergehend antreibbar vorsteht, wobei die Stichsäge (2) zum Ausführen von Eintauchschnitten um eine quer zur Antriebsrichtung des Stichsägenblatts (10) erstreckte Achse oder Kante (12) der Führungsplatte (8) neigbar ist und dass im Bereich dieser Achse oder Kante (12) ein
Rutschverhinderungsmittel (14) vorgesehen ist, mittels dessen die Führungsplatte (8) beim Neigen gegen das Werkstück anliegt, **dadurch gekennzeichnet, dass** das Rutschverhinderungsmittel (14) bei flächenhaft auf dem Werkstück aufliegender Führungsplatte (8) von dem Werkstück beabstandet ist, so dass es nicht mit dem Werkstück haftend zusammenwirkt.

2. Stichsäge nach Anspruch 1, **dadurch gekennzeichnet, dass** das Rutschverhinderungsmittel (14) ein elastisch nachgiebiges Material (18) umfasst.

3. Stichsäge nach Anspruch 2, **dadurch gekennzeichnet, dass** das Rutschverhinderungsmittel (14) eine Gummierung (20) umfasst.

4. Stichsäge nach Anspruch 1, 2 oder 3, **dadurch gekennzeichnet, dass** das Rutschverhinderungsmittel (14) unmittelbar oder mittelbar im Bereich einer vorderen Kante (12) der Führungsplatte (8) vorgesehen ist.

5. Stichsäge nach einem oder mehreren der vorstehenden Ansprüche, **dadurch gekennzeichnet, dass** das Rutschverhinderungsmittel (14) an einem zusätzlichen Trägerteil (28) vorgesehen ist, welches lösbar oder unlösbar an der Führungsplatte (8) befestigt ist.

6. Stichsäge nach einem oder mehreren der vorstehenden Ansprüche, **dadurch gekennzeichnet, dass** das Rutschverhinderungsmittel (14) angespritzt ist.

7. Stichsäge nach Anspruch 6, **dadurch gekennzeichnet, dass** das Rutschverhinderungsmittel ein Zweikomponentenspritzgussteil (22) umfasst.

8. Stichsäge nach einem oder mehreren der vorstehenden Ansprüche, **dadurch gekennzeichnet, dass** das Rutschverhinderungsmittel (14) durch lösbare Montagemittel (30), insbesondere Klemmmittel (32), an der Führungsplatte (8) befestigbar ist.

## Claims

1. Motor-driven handheld jigsaw (2) having a machine housing (4) and having a guide plate (8), facing the workpiece, via which the jigsaw blade (10) protrudes so as to be drivable back and forth, wherein, in order to execute plunge cuts, the jigsaw (2) is inclinable about an axis or edge (12), extending transversely to the driving direction of the jigsaw blade (10), of the guide plate (8), and wherein, in the region of this axis or edge (12), a slip prevention means (14) is provided, by means of which the guide plate (8) rests against the workpiece during inclination, **characterized in that** the slip prevention means (14) is spaced apart from the workpiece when the guide plate (8) rests flat on the workpiece, such that it does not interact with the workpiece in an adhering manner.

2. Jigsaw according to Claim 1, **characterized in that** the slip prevention means (14) comprises a resiliently flexible material (18).

3. Jigsaw according to Claim 2, **characterized in that** the slip prevention means (14) comprises a rubber coating (20).

4. Jigsaw according to Claim 1, 2 or 3, **characterized in that** the slip prevention means (14) is provided directly or indirectly in the region of a front edge (12) of the guide plate (8).

5. Jigsaw according to one or more of the preceding claims, **characterized in that** the slip prevention means (14) is provided on an additional carrier part (28) which is fastened releasably or non-releasably to the guide plate (8).

6. Jigsaw according to one or more of the preceding claims, **characterized in that** the slip prevention means (14) is moulded on.

7. Jigsaw according to Claim 6, **characterized in that** the slip prevention means (14) comprises a two-component injection-moulded part (22).

8. Jigsaw according to one or more of the preceding claims, **characterized in that** the slip prevention means (14) is fastenable to the guide plate (8) by releasable mounting means (30), in particular clamping means (32).

## Revendications

1. Scie sauteuse à entraînement électrique guidée manuellement (2) comportant un boîtier de machine (4) et une plaque de guidage (8) orientée vers une pièce de travail, par rapport à laquelle la lame de scie sauteuse (10) entraînée en va-et-vient peut se déplacer, dans laquelle la scie sauteuse (2), pour effectuer des coupes plongeantes peut être inclinée autour d'un axe ou d'un bord (12) de la plaque de guidage (8) disposé transversalement par rapport à la direction de l'entraînement de la lame de scie sauteuse (10), et dans laquelle un moyen (14) est agencé pour empêcher le glissement lors de l'inclinaison, par lequel la plaque de guidage (8) est en appui contre la pièce de travail lors de l'inclinaison, **caractérisée en ce que**
le moyen (14) agencé pour empêcher le glissement, lors du contact par appui de la pièce de travail sur la plaque de guidage (8), est distant de la pièce de travail, de sorte qu'elle ne coopère pas en étant en appui serré contre la pièce de travail.

2. Scie sauteuse selon la revendication 1, **caractérisée en ce que** le moyen (14) agencé pour empêcher le glissement comporte un matériau élastique déformable (18).

3. Scie sauteuse selon la revendication 2, **caractérisée en ce que** le moyen (14) agencé pour empêcher le glissement comporte un revêtement en caoutchouc (20).

4. Scie sauteuse selon les revendications1, 2 ou 3, **caractérisée en ce que** le moyen (14) agencé pour empêcher le glissement peut être monté directement ou indirectement à proximité du bord antérieur (12) de la plaque de guidage (8).

5. Scie sauteuse selon l'une ou plusieurs des revendications précédentes, **caractérisée en ce que** le moyen (14) agencé pour empêcher le glissement est disposé sur une pièce de support complémentaire (28), qui est fixée de façon détachable ou inamovible sur la plaque de guidage (8).

6. Scie sauteuse selon l'une ou plusieurs des revendications précédentes, **caractérisée en ce que** le moyen (14) agencé pour empêcher le glissement est appliqué par projection.

7. Scie sauteuse selon la revendication 6, **caractérisée en ce que** le moyen (14) agencé pour empêcher le glissement est une pièce en fonte à deux composants, projetée (22).

8. Scie sauteuse selon l'une ou plusieurs des revendications précédentes, **caractérisée en ce que** le moyen (14) agencé pour empêcher le glissement peut être fixé sur la plaque de guidage (8) par un moyen de fixation amovible (30), en particulier par pincement (32).
